# EUROPEAN PATENT SPECIFICATION

(11) **EP 1 720 761 B1**
(45) Date of publication and mention of the grant of the patent: **26.10.2011**
(21) Application number: 05710976.1
(22) Date of filing: 22.02.2005
(51) Int. Cl.: B62K 21/00, B62K 9/00, B62D 9/00

(54) **A VEHICLE**
FAHRZEUG
VEHICULE

(30) Priority: 04.03.2004 NZ 53154004
(43) Date of publication of application: 15.11.2006
(73) Proprietor: Flexibility Concepts Ltd., Palmerston North (NZ)
(72) Inventor: JACKMAN, Thomas, Palmerston North (NZ); SCOTT, David, Fielding (NZ)
(74) Representative: Jackson, Robert Patrick
(86) International application number: PCT/NZ2005/000025
(87) International publication number: WO 2005/085054

(56) References cited:
- EP-A- 1 203 714
- WO-A-03/084806
- WO-A-03/101817
- DE-U1- 20 006 382
- FR-A1- 2 613 314
- GB-A- 2 008 045
- US-A- 2 641 480
- US-A1- 2003 071 429

## Description

### Introduction

The present invention relates to a vehicle. In particular, the present invention relates to a vehicle with a steering device according to the preamble of claim 1.

Castor-type wheels are used on many vehicles such as shopping trolleys, mobile storage units and hospital beds. However, such vehicles can be difficult to steer because the castor-type wheel is fixed in a vertical position. Furthermore, where a vehicle includes more than one castor-type wheel, it can be difficult to turn all the castor-type wheels in the same direction, making it difficult to steer the vehicle.

GB 2 008 045 discloses a vehicle including a tiltable castor-type wheel. However, this vehicle has only one point of steering, which makes the vehicle harder to steer. Furthermore, because of the arrangement of the wheels and castor-type wheel of the vehicle, it is difficult to add a propulsion means to the vehicle.

EP 1203714 A2 discloses a tricycle comprising a front wheel and two rear wheels in a triangular formation. The front wheel is attached to a handle bar frame. The handlebar frame is received in a front tube and two foot board frames are pivoted with the front tube and are formed of a bottom tube, a foot board and the rear wheels.

WO 03/101817 A1 discloses a vehicle which is driven by an internal combustion engine or an electric motor and comprises a first person supporting frame that is provided with at least one running wheel and a second person supporting frame that is provided with at least an additional running wheel and runs essentially parallel to the first person supporting frame. A drive unit is disposed between the two person supporting frames and the drive unit can be inclined at an essentially identical angle to the two person supporting frames while riding through curves.

US 6182985 B1 discloses a restoring device of a frame for a skateboard comprising a height adjustable hand grip at the top of a front supporting bar which is attached with a main frame. A locating member is pivoted with the main frame so that, when the front supporting bar is moved by the hand grip to perform right and left turning, the main frame will create a side sloping action in order to achieve a wheel turning effect.

The object of the present invention is to provide a vehicle that overcomes at least one of the abovementioned difficulties, or at least to provide a useful alternative.

### Summary of the Invention

The present invention provides a vehicle including:
a load-bearing body having a front end and a rear end;
at least one carrier supporting the body on a surface on which the vehicle is positioned; **characterised in that** the vehicle further includes
a steering device comprising:
   at least one wheel and at least one castor-type wheel attached to the body and tiltable about a longitudinal axis of the body wherein in use, the at least
one wheel and the at least one castor-type wheel contact a support surface and the vehicle is steerable by tilting the at least one castor-type wheel and the at least one wheel about the longitudinal axis.

Preferably the vehicle includes one wheel and one castor-type wheel.

Preferably the vehicle includes two rotatable carriers. Preferably the two rotatable carriers and the wheel are proximate the rear end of the body and the castor-type wheel is proximate the front end of the body. Alternatively, the two rotatable carriers and the wheel are proximate the front end of the body and the castor-type wheel is proximate the rear end of the body. More preferably the two rotatable carriers and the castor-type wheel are in a T-shaped arrangement.

Preferably the carriers are rotatable. Preferably the rotatable carriers are wheels.

Preferably the steering device includes a longitudinal shaft attached to the body and rotatable about its longitudinal axis, a handle attached to the shaft adapted to rotate the shaft about its longitudinal axis and the at least one wheel and the at least one castor-type wheel are attached to the steering device.

Preferably the longitudinal shaft is vertically movable with respect to the body.

In one preferred embodiment, the handle is attached to the shaft proximate the rear end of the body and is adapted to be operated from behind the vehicle. In this embodiment the at least one castor-type wheel is attached to the shaft and the at least one wheel is attached to the shaft or the handle.

In an alternative embodiment, the handle is attached to the shaft proximate the front end of the body. In this embodiment, the at least one wheel is attached to the shaft and the at least one castor-type wheel may be attached to the shaft or the handle.

Preferably the handle is a generally upwardly extending shaft including a cross-bar proximate an upper end. Alternatively the handle is a joystick or a steering wheel.

In one embodiment the vehicle is a cart and includes at least one seat adapted to carry a passenger. In an alternative embodiment the vehicle is a trolley and includes a flat surface for carrying goods.

Preferably the vehicle further includes a propulsion means.

Preferably the propulsion means drives the wheel.

Preferably the propulsion means is selected from a motor, a jigger, and a chain and crank.

Preferably the propulsion means is operable by a passenger in the seat.

### Brief Description of the Invention

A preferred embodiment of the invention will now be described, by way of example only, with reference to:
- Figure 1:: a cross-sectional view of one embodiment of a vehicle according to the invention;
- Figure 2:: a top-plan view of the embodiment of in the invention shown in Figures 1;
- Figure 3:: a perspective view of a steering device used in the embodiment of the invention show in Figure 1; and
- Figure 4:: a front plan view of the embodiment of the invention shown in Figure 1.

### Detailed Description of the Invention

The term "vehicle" is not limited to devices for carrying and transporting people, but also includes any device which may be placed on carriers to be moved. Examples of the application of the present invention are provided hereunder and serve to expound the meaning of the term "vehicle".

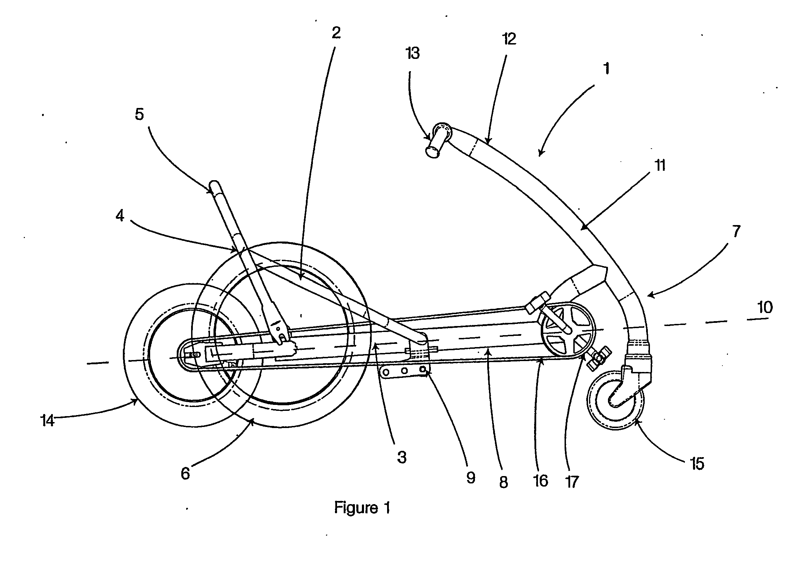

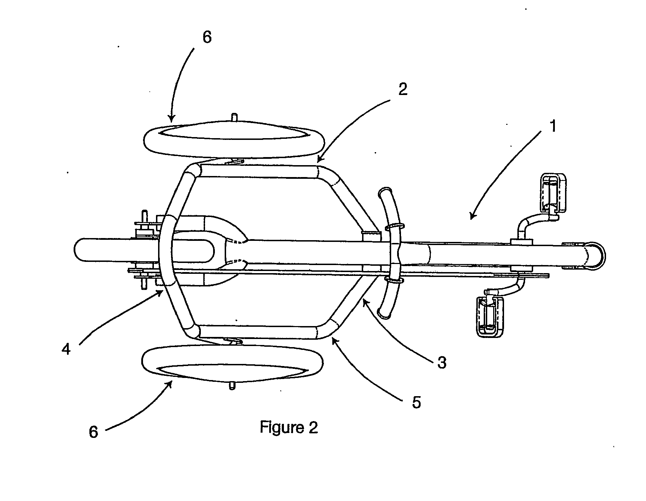

With reference to Figures 1 and 2, a vehicle (1) of the present invention includes a load-bearing body (2) having a front end (3) and a rear end (4). The load-bearing body (2) is illustrated as a frame (5) which can support a seat (not shown). However, any suitable load-bearing body, such as a flat surface for carrying goods, can be used.

The load-bearing body (2) is supported by at least one carrier (6). The carrier is illustrated as a wheel, however any suitable carrier can be used, such as a caterpillar track. Furthermore, the carrier is not necessarily rotatable and can include fixed carriers such as a ski foot.

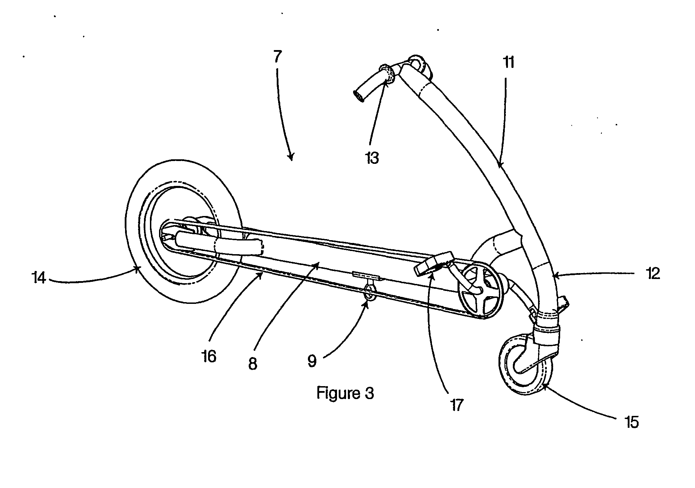

With reference to Figure 1 and Figure 3, a preferred vehicle (1) includes a steering device (7). The steering device (7) includes a longitudinal shaft (8) attached to the body (2) via a joint (9). The joint (9) is illustrated as rose joint which allows the steering device (7) to move up and down with respect to the load-bearing body (2). This provides suspension for the load-bearing body (2) absorbing shock when the vehicle (1) travels over rough terrain, stabilizing the vehicle (1). The joint (9) also allow the shaft (8) to rotate about the longitudinal axis (10) of the vehicle (1).

A handle (11) is attached to the shaft (8) to rotate the shaft (8) about the longitudinal axis (10). The handle (11) is illustrated at the front of the vehicle so that it can be operated by a passenger (not shown). However, the handle (11) can also be positioned at the rear of the vehicle (1) so that it may be operated by a person from behind the vehicle (1). This arrangement could be used if the vehicle (1) was, for example, a trolley for carrying goods.

The handle (11) is illustrated as a generally upwardly extending shaft (12) including a cross-bar (13) proximate the upper end of the upwardly extending shaft (12). However, it will be appreciated that other handles such as a joystick may also be employed.

The steering device (7) also includes a wheel (14) and castor-type wheel (15). The steering device (7) is illustrated with the wheel (14) attached to the shaft (8) and the castor-type wheel (15) attached to the handle (11). However, the castor-type wheel (15) may also be attached to the shaft (8). Furthermore, in embodiments where the handle (11) is attached near the rear of the vehicle (1), the wheel (14) may be attached to the handle (11).

The steering device (7) is illustrated with the wheel (14) and the castor-type wheel (15) along the longitudinal axis (10) of the vehicle (1). However, it will be appreciated that the relative position of the wheel (14) and the castor-type wheel (15) is not essential to the working of the present invention.

The vehicle (1) may optionally include a propulsion means (16). The propulsion means (16) is illustrated as a crank and chain (17) assembly. However, any suitable know propulsion means may be used.

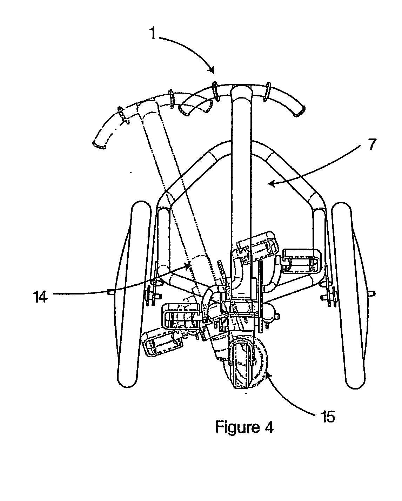

With reference to Figure 4, when the longitudinal shaft (8) is rotated about the longitudinal axis (10), the wheel (14) and the castor-type wheel (15) are tilted in the same direction about the longitudinal axis (10), the wheel (14) and castor-type wheel (15) tilt with respect to the support surface (16) and the castor-type wheel (15) turns (as shown in the dotted lines) steering the vehicle (1).

The vehicle (1) is illustrated with the castor-type wheel (15) supporting the vehicle (1). However, the wheel (14) and/or the castor-type wheel (15) may or may not support the vehicle (1) depending on the arrangement of the carriers (6).

It is not necessary that the vehicle (1) should in fact be operated on three wheels but could be operated on two wheels for such articles as scooters. Furthermore, arrangements can be provided which would operate on a four wheel vehicle having a two castor-type wheels whose axes are connected by a linkage so that they can be tilted together.

Examples for industrial application include: mobile benches, hospital trolleys and stretchers, instrument and general tool trolleys, invalid carriages, motorised trolleys, executive chairs, moveable filing cabinets and roll pallets.

In the home, the invention can be used for television stands, carpet sweepers and shampooers, moveable beds, coffee tables, tea trolleys, hostess trolleys, storage units, moveable wardrobes, DIY moveable scaffolding decorating units and runners for positioning under articles of furniture such as cookers, fridges, washing machines etc.

In the garden, the invention can be applied to lawn mowers, work trolleys, water carriers, rubbish containers and cultivators. For use in toys, the invention can be applied to scooters, baby walkers, and other mobile toys such as horses, tricycles, carts, etc., dolls prams, toboggans etc. The present invention also has further applications such as in golf trolleys, moveable car jacks, car work trolleys, push chairs or baby carriages, vehicle trailers, laundry containers etc.

Where in the foregoing description, reference has been made to integers or components having known equivalents, those equivalents are herein incorporated as if individually set forth.

It will be appreciated by one skilled in the art that variations and modifications can be made to the invention without departing from the scope of the invention as set out in the following claims.

## Claims

1. A vehicle (1) including:
a load-bearing body (2) having a front end (3) and a rear end (4);
at least one carrier (6) supporting the body (2) on a surface on which the vehicle is positioned; **characterised in that** the vehicle further includes
a steering device (7) comprising:
at least one wheel (14) and at least one castor-type wheel (15) attached to the body (2) and tiltable about a longitudinal axis (10) of the body wherein in use, the at least one wheel (14) and the at least one castor-type wheel (15) contact a support surface and the vehicle (1) is steerable by tilting the at least one castor-type wheel (15) and the at least one wheel (14) about the longitudinal axis (10).

2. The vehicle according to claim 1, wherein the vehicle (1) includes one wheel (14) and one castor-type wheel (15).

3. The vehicle according to claim 1, wherein the vehicle includes two rotatable carriers (6).

4. The vehicle according to claim 3, wherein the two rotatable carriers (6) and the wheel (14) are proximate the rear end (4) of the body and the castor-type wheel (15) is proximate the front end (3) of the body.

5. The vehicle according to claim 3, wherein the two rotatable carriers (6) and the wheel (14) are proximate the front end (3) of the body and the castor-type wheel (15) is proximate the rear end (4) of the body.

6. The vehicle according to claim 4 or claim 5, wherein the two rotatable carriers (6) and the castor-type wheel (15) are in a T-shaped arrangement.

7. The vehicle according any one of claims 1 to 6, wherein the at least one carrier (6) is rotatable.

8. The vehicle according to claim 7, wherein the at least one rotatable carrier (6) is a wheel.

9. The vehicle according to any one of claims 1 to 8, wherein the steering device (7) includes a longitudinal shaft (8) attached to the body (2) and rotatable about its longitudinal axis (10), a handle (11) attached to the shaft adapted to rotate the shaft about its longitudinal axis (10) and the at least one wheel (14) and the at least one castor-type wheel (15) are attached to the steering device (7).

10. The vehicle according to claim 9, wherein the longitudinal shaft (8) is vertically movable with respect to the body (2).

11. The vehicle according to claim 9 or 10, wherein the handle (11) is attached to the shaft (8) proximate the rear end (4) of the body and is adapted to be operated from behind the vehicle (1).

12. The vehicle according to any one of claims 9 to 11. wherein the handle (11) is attached to the shaft (8) proximate the front end (3) of the body.

13. The vehicle according to claim 12, wherein the at least one wheel (14) is attached to the shaft (8) and the at least one castor-type wheel (15) may be attached to the shaft (8) or the handle (11).

14. The vehicle according to any one of claims 9 to 13, wherein the handle (11) is a generally upwardly extending shaft (12) including a cross-bar (13) proximate an upper end.

15. The vehicle according to any one of claims 9 to 14, wherein the handle (11) is a joystick or a steering wheel.

16. The vehicle according to any one of claims 1 to 15, wherein the vehicle is a cart and includes at least one seat adapted to carry a passenger.

17. The vehicle according to any one of claims 1 to 15, wherein the vehicle is a trolley and includes a flat surface for carrying goods.

18. The vehicle according to any one of claims 1 to 17, wherein the vehicle further includes a propulsion means.

19. The vehicle according to claim 18, wherein the propulsion means is selected from a motor, a jigger, and a chain and crank.

## Patentansprüche

1. Fahrzeug (1), das enthält:
einen lasttragenden Körper (2) mit einem vorderen Ende (3) und einem hinteren Ende (4);
wenigstens einen Träger (6), der den Körper (2) auf einer Oberfläche unterstützt, auf der das Fahrzeug positioniert ist; **dadurch gekennzeichnet, dass** das Fahrzeug ferner enthält:
eine Lenkvorrichtung (7), die enthält:
wenigstens ein Rad (14) und wenigstens ein Rad des Castor- bzw. Laufrollentyps (15), das an dem Körper befestigt ist und um eine Längsachse (10) des Körpers neigbar ist, wobei im Gebrauch das wenigstens eine Rad (14) und das wenigstens eine Rad (15) des Laufrollentyps mit einer Unterstützungsoberfläche in Kontakt sind und das Fahrzeug (1) durch Neigen des wenigstens einen Rades (15) des Laufrollentyps und des wenigstens einen Rades (14) um die Längsachse (10) lenkbar ist.

2. Fahrzeug nach Anspruch 1, wobei das Fahrzeug (1) ein Rad (14) und ein Rad (15) des Laufrollentyps aufweist.

3. Fahrzeug nach Anspruch 1, wobei das Fahrzeug zwei drehbare Träger (6) enthält.

4. Fahrzeug nach Anspruch 3, wobei die zwei drehbaren Träger (6) und das Rad (14) sich in der Nähe des hinteren Endes (4) des Körpers befinden und das Rad (15) des Laufrollentyps sich in der Nähe des vorderen Endes (3) des Körpers befindet.

5. Fahrzeug nach Anspruch 3, wobei die zwei drehbaren Träger (6) und das Rad (14) sich in der Nähe des vorderen Endes (3) des Körpers befinden und das Rad (15) des Laufrollentyps sich in der Nähe des hinteren Endes (4) des Körpers befindet.

6. Fahrzeug nach Anspruch 4 oder Anspruch 5, wobei die zwei drehbaren Träger (6) und das Rad (15) des Laufrollentyps eine T-förmige Anordnung bilden.

7. Fahrzeug nach einem der Ansprüche 1 bis 6, wobei der wenigstens eine Träger (6) drehbar ist.

8. Fahrzeug nach Anspruch 7, wobei der wenigstens eine drehbare Träger (6) ein Rad ist.

9. Fahrzeug nach einem der Ansprüche 1 bis 8, wobei die Lenkvorrichtung (7) eine longitudinale Welle (8), die an dem Körper (2) befestigt ist und um ihre Längsachse (10) drehbar ist, und einen Griff (11), der an der Welle befestigt ist und dazu ausgelegt ist, die Welle um ihre Längsachse (10) zu drehen, enthält, wobei das wenigstens eine Rad (14) und das wenigstens eine Rad (15) des Laufrollentyps an der Lenkvorrichtung (7) befestigt sind.

10. Fahrzeug nach Anspruch 9, wobei die longitudinale Welle (8) in Bezug auf den Körper (2) vertikal beweglich ist.

11. Fahrzeug nach Anspruch 9 oder 10, wobei der Griff (11) an der Welle (8) in der Nähe des hinteren Endes (4) des Körpers befestigt ist und dazu ausgelegt ist, von dem Bereich hinter dem Fahrzeug (1) aus bedient zu werden.

12. Fahrzeug nach einem der Ansprüche 9 bis 11, wobei der Griff (11) an der Welle (8) in der Nähe des vorderen Endes (3) des Körpers befestigt ist.

13. Fahrzeug nach Anspruch 12, wobei das wenigstens eine Rad (14) an der Welle (8) befestigt ist und das wenigstens eine Rad (15) des Laufrollentyps an der Welle (8) oder an dem Griff (11) befestigt sein kann.

14. Fahrzeug nach einem der Ansprüche 9 bis 13, wobei der Griff (11) eine im Allgemeinen nach oben sich erstreckende Welle (12) ist, die in der Nähe ihres oberen Endes einen Querstab (13) aufweist.

15. Fahrzeug nach einem der Ansprüche 9 bis 14, wobei der Griff (11) ein Joystick oder ein Lenkrad ist.

16. Fahrzeug nach einem der Ansprüche 1 bis 15, wobei das Fahrzeug ein Wagen ist und wenigstens einen Sitz aufweist, der dazu ausgelegt ist, einen Fahrgast zu tragen.

17. Fahrzeug nach einem der Ansprüche 1 bis 15, wobei das Fahrzeug ein Karren ist und eine flache Oberfläche aufweist, um Güter zu tragen.

18. Fahrzeug nach einem der Ansprüche 1 bis 17, wobei das Fahrzeug ein Vortriebsmittel enthält.

19. Fahrzeug nach Anspruch 18, wobei das Vortriebsmittel aus einem Motor, einem Besanmast und einer Ketten- und Kurbelanordnung ausgewählt ist.

## Revendications

1. véhicule (1) comprenant :
un corps de support de charge (2) ayant une extrémité avant (3) et une extrémité arrière (4) ;
au moins un support (6) supportant le corps (2) sur une surface sur laquelle le véhicule est positionné ; **caractérisé en ce que** le véhicule comprend en outre
un dispositif de direction (7) comprenant :
au moins une roue (14) et au moins une roulette pivotante (15) fixées au corps (2) et inclinables autour d'un axe longitudinal (10) du corps, dans lequel, en utilisation, la au moins une roue (14) et la au moins une roulette pivotante (15) sont en contact avec une surface de support et le véhicule (1) est dirigeable en inclinant la au moins une roulette pivotante (15) et la au moins une roue (14) autour de l'axe longitudinal (10).

2. Véhicule selon la revendication 1, dans lequel le véhicule (1) comprend une roue (14) et une roulette pivotante (15).

3. Véhicule selon la revendication 1, dans lequel le véhicule comprend deux supports rotatifs (6).

4. Véhicule selon la revendication 3, dans lequel les deux supports rotatifs (6) et la roue (14) sont proches de l'extrémité arrière (4) du corps et la roulette pivotante (15) est proche de l'extrémité avant (3) du corps.

5. Véhicule selon la revendication 3, dans lequel les deux supports rotatifs (6) et la roue (14) sont proches de l'extrémité avant (3) du corps et la roulette pivotante (15) est proche de l'extrémité arrière (4) du corps.

6. véhicule selon la revendication 4 ou la revendication 5, dans lequel les deux supports rotatifs (6) et la roulette pivotante (15) sont dans un agencement en forme de T.

7. Véhicule selon l'une quelconque des revendications 1 à 6, dans lequel le au moins un support (6) est rotatif.

8. véhicule selon la revendication 7, dans lequel le au moins un support rotatif (6) est une roue.

9. Véhicule selon l'une quelconque des revendications 1 à 8, dans lequel le dispositif de direction (7) comprend un arbre longitudinal (8) fixé au corps (2) et pouvant tourner autour de son axe longitudinal (10), un manche (11) fixé à l'arbre, adapté pour faire tourner l'arbre autour de son axe longitudinal (10) et la au moins une roue (14) et la au moins une roulette pivotante (15) sont fixées au dispositif de direction (7).

10. Véhicule selon la revendication 9, dans lequel l'arbre longitudinal (8) est mobile verticalement par rapport au corps (2).

11. Véhicule selon la revendication 9 ou 10, dans lequel le manche (11) est fixé à l'arbre (8) à proximité de l'extrémité arrière (4) du corps et est adapté pour être actionné depuis l'arrière du véhicule (1).

12. véhicule selon l'une quelconque des revendications 9 à 11, dans lequel le manche (11) est fixé à l'arbre (8) à proximité de l'extrémité avant (3) du corps.

13. véhicule selon la revendication 12, dans lequel la au moins une roue (14) est fixée à l'arbre (8) et la au moins une roulette pivotante (15) peut être fixée à l'arbre (8) ou au manche (11).

14. Véhicule selon l'une quelconque des revendications 2 à 13, dans lequel le manche (11) est un arbre (12) s'étendant généralement vers le haut et comprenant une barre transversale (13) à proximité d'une extrémité supérieure.

15. véhicule selon l'une quelconque des revendications 9 à 14, dans lequel le manche (11) est un manche à balai ou un volant de direction.

16. Véhicule selon l'une quelconque des revendications 1 à 15, dans lequel le véhicule est une voiturette et comprend au moins un siège adapté pour transporter un passager.

17. véhicule selon l'une quelconque des revendications 1 à 15, dans lequel le véhicule est un chariot et comprend une surface plate pour transporter des marchandises.

18. Véhicule selon l'une quelconque des revendications 1 à 17, dans lequel le véhicule comprend en outre des moyens de propulsion.

19. véhicule selon la revendication 18, dans lequel les moyens de propulsion sont sélectionnés parmi un moteur, un bras basculant et une chaîne et manivelle.
